# EUROPEAN PATENT APPLICATION

(11) **EP 4 368 026 A1**
(43) Date of publication of application: **15.05.2024**
(21) Application number: 23208655.3
(22) Date of filing: 08.11.2023
(51) Int. Cl.: A21D 17/00, A21D 10/00

(54) **PROCESS FOR PREPARING A MIXTURE TO BE ADDED TO DOUGHS FOR BAKED GOODS**

(30) Priority: 10.11.2022 IT 202200023223
(71) Applicant: Grande, Dino, 36073 Cornedo Vicentino (VI) (IT)
(72) Inventor: Grande, Dino, 36073 Cornedo Vicentino (VI) (IT)
(74) Representative: Gatti, Enrico

(57) **Abstract**

Process for preparing a mixture in paste or freeze-dried to be added to doughs for sweet or savoury products, comprising the phases of: grinding basic products in a grinder to obtain a ground material; where said basic products comprise durum wheat semolina pasta and/or bread and/or baked goods; cooking said ground product to obtain a precooked product; cooling said precooked product to obtain a cooled precooked product; mixing said cooled precooked product with a mixture of malt, yeasts and lactobacilli, where said yeasts comprise Kluyveromyces.

## Description

The present invention relates to a process for preparing a mixture in paste or freeze-dried to be added to doughs for sweet or savoury baked goods and to the relative mixture.

Doughs for sweet and savoury baked goods are normally prepared with soft wheat flour, durum wheat flour, Kamut flour, emmer wheat flour, rye flour and other, lesser-known wheat and cereal flours, mixed with water and natural raising agents such as sour dough or with other yeasts. Sweet or savoury products are obtained with organoleptic and digestibility characteristics that differ greatly depending on the ingredients used in the recipe and the processing methods, such as rising, resting and cooking.

It is well-known that gluten is the backbone of all leavened products, such as bread, pizzas, desserts and leavened products in general, since it is capable, as it possesses particular characteristics, through formation of the gluten mesh, of trapping the fermentation gases in the dough. This ability, combined with those of cohesion, homogeneity, viscoelasticity and strength, allows a soft and elastic product that is pleasant on the palate to be obtained.

The object of the present invention is to provide a process for preparing a mixture to be added to doughs for baked goods that allows the scraps of baked products based on durum wheat, durum wheat semolina pasta and durum wheat flour bread to be reused.

According to the present invention, these objects and others are achieved by a process for preparing a mixture in paste or freeze-dried to be added to doughs for sweet or savoury products in accordance with claim 1.

These objects are also achieved by a mixture in paste or freeze-dried to be added to doughs for sweet or savoury products in accordance with the procedure described in claim 1.

They are also achieved by a dough for baked products comprising a mixture in paste or freeze-dried in accordance with claim 9, in a quantity between 5% and 50%.

Further characteristics of the invention are described in the dependent claims.

This solution has various advantages with respect to the solutions of the prior art.

The mixture, in accordance with the present invention, is obtained from the production scraps of foods or part of products no longer usable, since they are ruined or not suitable for being marketed, thus effectively avoiding wasting them, based on durum wheat, since it contains more proteins than soft wheat flour, absorbs more water and has a greater satiating power. It has a lower glycaemic index than the one of soft wheat flour and is full of carotenoids, organic pigments with an antioxidant action and anti-free radicals.

The proteins present in durum wheat, such as gliadin and glutenin, contribute to the formation of a stronger and more resistant gluten.

Through particular processes, it has been possible to extract and at the same time to reuse the gluten protein and the starches contained in the scraps.

The product provides for the reuse of the materials in successive production cycles. The waste, in this case the processing scrap, is not thrown into the rubbish but lives longer, since it is reprocessed, remodelled and recovered to produce a new product. In this manner, waste is reduced and available natural resources are preserved. The recovered gluten becomes reusable once again and the starch can also be given new life, even improving its quality.

The product combined as a component of the new recipe brings out the properties of the dough, obtaining a better product in terms of homogeneity, rising and digestibility, and also softness and duration, thus lengthening the natural expiry date of the products.

The so-called gelatinisation of starch is a fundamentally important process for human nutrition. It is sufficient to remember that it plays a decisive role in the preparation of products such as bread, pasta and rice; it is also fundamental in all pastry products, such as crème patissière, profiteroles or sponge cake.

Starch is formed of two complex molecules, amylose and amylopectin. Amylose is formed of long linear chains of glucose that are twisted in a helical shape, while amylopectin has a branched structure. These two molecules aggregate to form granules that are insoluble in water at ambient temperature and difficult for the digestive enzymes to attack.

According to the present invention, the starch granules are taken to a high temperature, in an aqueous environment, in order to become digestible. In these conditions, they are hydrated, lose their orderly structure and assume a disorderly structure, with the characteristics of a gel. This is the process of gelatinisation of the starches that makes them attackable by the digestive enzymes. The gelatinisation of the starches therefore occurs as a result of heating in an aqueous environment. The starch granules hydrate progressively, swelling and losing their crystalline structure, the amylose and amylopectin enter into a solution with the water, forming bonds with it, the free water decreases and the viscosity of the solution increases as a consequence.

When the gelatinised starch cools, a phenomenon called retrogradation (or recrystallisation) of the starch occurs, a process that tends to return the starch to a similar configuration to the initial one.

What occurs with retrogradation is a rearrangement of the amylose and amylopectin chains, with consequent exclusion of a part of the water that had been incorporated by the structure. Retrogradation is a reversible process, in the sense that the starch gelatinises once again by supplying heat to the product.

From a functional viewpoint, the gluten and the starch contained in the scraps, during the various processing stages, undergo a transformation such as to have, after sufficient mechanical mixing and natural fermentation, an elasticity such as to replace, in part, the gluten mass of a traditional dough, in addition to obtaining more easily usable sugars from the yeasts during the rising process.

Gelatinisation of the starch improves the capacity of the flour to absorb water and, furthermore, stiffening of the proteins, due to the combined action of heat and steam, facilitates the formation of a highly firm gluten mesh, obtaining a part of resistant starches and consequently a lower glycaemic index.

The final product, obtained with the addition of the mixture, according to the present invention, will be soft and have a regular honeycombing that is very well-distributed inside the product.

The mixture improves the characteristics of any product, making it more digestible, thanks to precooking and gelatinisation of the starches, to the lower quantity of gliadin present compared to a normal dough, to the higher quantity of free water, to the lower calorie count, to the lower glycaemic index, to the lower sodium content and to the lower use of yeast for baking.

The characteristics and advantages of the present invention will become apparent from the following detailed description of a practical embodiment, illustrated by way of a non-limiting example.

The process takes place in three stages.

A pre-mixing of the ingredients with the addition of malt and yeasts opportunely selected on the basis of the quantity and the type of sugars present in the initial mixture; these yeasts may be chosen as a function of the necessary action on the mixture.

In the case of a low quantity of sugars being present, more efficient species will be taken into consideration, such as Kluyveromyces in the Saccharomyces family, highly efficient in reducing the possibility of parallel development of other, undesired micro-organisms; other yeasts in the Saccharomyces family can also be used (*Saccharomyces cerevisiae* or *Saccharomyces bayanus*) to complete and refine the action further.

In the case of higher initial sugar quantities, traditional Saccharomyces can be used, such as *S*. *bayanus* due to its lower alcohol production with the same fermentation efficiency.

If the microbiological situation of the dough allows, it is possible to use, in addition to yeasts, the lactobacilli (*Lactobacillus acidophylus*) typical of products such as kefir, in order to obtain a higher quantity of trace elements and a greater digestibility of the product.

With a 48-hour resting period, during which the activity of the micro-organisms proceeds and processing of the proteins continues, together with retrogradation of the starches. Peptones and new simple sugars are produced. Lowering the temperature at the end of the rest period will allow the phenomenon to be kept under control, thus avoiding excessive rising of the mass and perhaps the end of the stationary phase of the bacterial growth curve, a factor that must clearly be avoided at all costs.

Start of use may take place using two separate methods.

Direct use in a dough; the mixture obtained will have the function of a starter, contributing further sugars and other highly efficient populations of micro-organisms, capable of immediately starting the rising process in a correct manner, avoiding the simultaneous action of undesired or less efficient micro-organisms. The finished product will therefore have a more limited protein content and a decidedly lower presence of sugar, thus making the final product more digestible and characterised by a more limited glycaemic peak in the consumer of said product.

Use as a "starter", to be marketed as such; the mixture can therefore be rapidly blast chilled or freeze dried in a manner to be packaged and marketed as such.

Both treatments will not affect the vitality of the micro-organisms of the mixture, which will therefore be able to perform its function efficiently, even at some distance in time and location from the moment of its production.

This second possible use will also make any customisation of the product that the customer intends to produce possible.

According to the present invention, research and selection is performed of a basic product to use for production of the mixture, such as durum wheat semolina pasta and bread, and durum wheat baked products (panettone and sweet products for festivities). The basic product contains gluten.

Based on the results of analysis of the scrap raw material obtained, it is possible to proceed with drying with a fluidised bed dryer or in drying cells, with ovens or on the stove up to the percentage of ideal humidity, for example lower than 10%

In order to lower the storage volume, the product is ground with a knife mill grinder or with a stone mill or roll refiner, to obtain a particle size lower than 1 mm, and is stored.

The above serves for preparation of the scrap materials to be reused for preparation of the product in accordance with the present invention.

Meanwhile, the technological part is prepared, with the addition of malt, yeasts and lactobacilli opportunely selected on the basis of the quantity and the type of sugars present in the initial mixture; these yeasts may be chosen as a function of the necessary action on the mixture.

For example, a mixture of malt, yeasts and lactobacilli is prepared, water is added (at 15°C) and it is mixed until a smooth mixture is obtained. The mixture is preserved in a cell at 4°C for 120 minutes.

In one embodiment, with respect to the quantity of scrap materials to be processed, 42% water, 0.5% malt, 0.4% yeasts and 0.1% of lactobacilli (kefir) was used.

The yeasts were preferably Kluyveromyces and optionally, to complete and further refine the action, Saccharomyces Cerevisiae or Saccharomyces *bayanus.*

The lactobacilli were of the Kefir type.

For preparation of the mixture, a specific stainless steel container, equipped with a mixer, is filled with water heated to 75°C, the ground scraps prepared previously are incorporated and the entire mixture is cooked to obtain a precooked product. The mixer is started at a pre-set speed and the mixture is cooked for 20 minutes.

Cooking is performed using steam boilers (steam of artificial or geothermal origin) or with use of pans on the stove.

The product thus obtained is then passed into a cooling tower or into special containers and cooled in a blast chiller or in cold rooms until it reaches the temperature of 40°C, ideal for addition of the technological part.

After cooling, the mixture passes through special spiral or planetary mixers or special mixers are used or it is mixed by hand.

Once the mixture has blended dissolved, with a mixture temperature below 40°C, the solution of water, malt, yeasts and lactobacilli prepared previously is added.

It is mixed gently with a special tool to obtain a smooth mixture, then left to mature for 48 hours in a temperature-controlled room at a temperature of 10° C, during which the activity of the micro-organisms proceeds. Processing of the proteins continues, together with retrogradation of the starches. In this phase, peptones and new simple sugars are produced.

The product thus obtained can be used in paste, in frozen or freeze-dried paste.

For the paste, the product is simply placed in containers and put in the refrigerator at 4°C.

For the frozen version, the product is placed in special stainless steel containers in a blast chiller at a temperature of -40°C for 90 minutes. The product is placed in containers or bags and stored at a temperature of - 18°C.

For the freeze-dried version, the method basically comprises two physical transformations: freezing and sublimation.

The freeze-dried product can be stored for 180 days, the product in paste for 15 days at a storage temperature of 4°C, in frozen paste for 120 days at a storage temperature of -18°C.

Table 1 below shows the nutritional values of a generic bread with or without the present mixture.

The mixture according to the present invention can be used for the preparation of doughs for baked goods in quantities between 5% and 50% of the total weight.

The mixture, which is to be considered as an ingredient for doughs for sweet or savoury products, will have the function of a starter, contributing further sugars and other highly efficient populations of micro-organisms, capable of immediately starting the rising process in a correct manner, avoiding the simultaneous action of undesired or less efficient micro-organisms. The finished product will therefore have a more limited protein content and a decidedly lower presence of sugar, thus making the final product more digestible and characterised by a more limited glycaemic peak in the consumer of said product.

Although the invention is described here above with particular reference to one of its embodiments, provided solely as a non-limiting example, numerous changes and variants will be clear to a person skilled in the art, in light of the description provided.

The present invention is therefore intended to embrace all changes and variants that fall within the scope of the claims that follow.

| TABLE 1 | | | |
|---|---|---|---|
| average value on 100g | | | |
| | | product containing the mixture at 25% in accordance with the present invention | traditional product |
| energy | kj/kcal | 196/820 | 266/1.112 |
| fats | g | 1.40 | 1.51 |
| of which saturated fatty acids | g | 0.14 | 0.85 |
| carbohydrates | g | 40.28 | 54.05 |
| of which sugars | g | 1.04 | 2.03 |
| fibre | g | 1.43 | 2.70 |
| protein | g | 5.91 | 10.09 |
| salt | g | 0.78 | 1.33 |

## Claims

1. Process for preparing a mixture in paste or freeze-dried to be added to doughs for sweet or savoury products, comprising the phases of: grinding basic products in a grinder to obtain a ground material; where said basic products comprise durum wheat semolina pasta and/or bread and/or baked goods; cooking said ground product to obtain a precooked product; cooling said precooked product to obtain a cooled precooked product; mixing said cooled precooked product with a mixture of malt, yeasts and lactobacilli, where said yeasts comprise Kluyveromyces.

2. The process according to claim 1, **characterised in that** said lactobacilli comprise Kefir.

3. The process according to claim 1, **characterised in that** said yeasts comprise Saccharomyces cerevisiae or Saccharomyces bayanus.

4. The process according to claim 1, **characterised in that** said basic products are dried to obtain a pre-set humidity value.

5. The process according to claim 1, **characterised in that** said ground product has a particle size lower than 1 mm.

6. The process according to claim 1, **characterised in that** the cooking phase of said ground product to obtain a precooked product takes place at 75°C for 20 minutes.

7. The process according to claim 1, **characterised in that** the cooling phase of said precooked product to obtain a cooled precooked product takes place at a temperature below 30°C.

8. The process according to claim 1, **characterised in that** the mixture of malt, yeasts and lactobacilli is stored in a room at 4°C for 120 minutes.

9. Mixture in paste or freeze-dried to be added to doughs for sweet or savoury products in accordance with the procedure described in claim 1.

10. Dough for baked products comprising a mixture in paste or freeze-dried in accordance with claim 9, in a quantity between 5% and 50%.
